# EUROPÄISCHE PATENTSCHRIFT

(11) **EP 2 408 534 B1**
(45) Veröffentlichungstag und Bekanntmachung des Hinweises auf die Patenterteilung: **04.09.2013**
(21) Anmeldenummer: 10706637.5
(22) Anmeldetag: 03.03.2010
(51) Int. Cl.: B01D 17/04, C02F 1/02, C02F 1/52, C02F 103/38

(54) **ABTRENNUNG VON SILICIUMORGANISCHEN VERBINDUNGEN AUS ABWASSER**
SEPARATION OF ORGANOSILICON COMPOUNDS FROM WASTEWATER
SÉPARATION DE COMPOSÉS ORGANOSILICIÉS ET D'EAUX USÉES

(30) Priorität: 17.03.2009 DE 102009001613
(43) Veröffentlichungstag der Anmeldung: 25.01.2012
(73) Patentinhaber: Wacker Chemie AG, 81737 München (DE)
(72) Erfinder: BÜTTNER, Ulrike, 01619 Bobersen (DE); KUTZ, Susanne, 01591 Riesa (DE); MÜLLER, Winfried, 01612 Nünchritz / OT Goltzscha (DE)
(74) Vertreter: Fritz, Helmut
(86) Internationale Anmeldenummer: PCT/EP2010/052688
(87) Internationale Veröffentlichungsnummer: WO 2010/105907

(56) Entgegenhaltungen:
- DE-A1- 19 638 123
- US-A- 3 855 124
- US-B1- 6 299 780
- TEIXEIRA A C S C ET AL: "Degradation of an aminosilicone polymer in a water emulsion by the Fenton and the photochemically enhanced Fenton reactions" CHEMICAL ENGINEERING AND PROCESSING, ELSEVIER SEQUOIA, LAUSANNE, CH LNKD- DOI:10.1016/J.CEP.2004.11.002, Bd. 44, Nr. 8, 1. August 2005 (2005-08-01) , Seiten 923-931, XP004823716 ISSN: 0255-2701

## Beschreibung

Die Erfindung betrifft ein Verfahren zur Abtrennung von siliciumorganischen Verbindungen aus siliciumorganischen Verbindungen enthaltendem Abwasser.

Bei Hydrolyseprozessen mit Silanen, wie bei der Siloxanherstellung fallen Abwässer mit siliciumorganischen Verbindungen an. Die im Wasser enthaltenen siliciumorganischen Verbindungen sind biologisch nicht abbaubar und verursachen den sogenannten persistenten CSB (Chemischer Sauerstoff Bedarf). Der persistente CSB im Abwasser ist aus Umweltschutzgründen zu vermeiden.

Die Ozonolyse ist ein bekanntes Verfahren zum Abbau von persistentem CSB aus Abwasser, weist aber hohe Betriebskosten auf und führt zum Verlust der siliciumorganischen Verbindungen. Die Adsorption der siliciumorganischen Verbindungen an Kieselgel ist ebenfalls bekannt, jedoch ist dessen Regenerierung nicht möglich. Deshalb fallen auch hier hohe Kosten an und die siliciumorganischen Verbindungen gehen verloren.

In DE 113478, DE 2436080 und DE 2804968 sind Verfahren und Vorrichtungen beschrieben, mit denen flüssig/flüssig Phasen aufgetrennt werden können. Mit den beschriebenen Phasentrennelementen lassen sich nur die Tröpfchen der siliciumorganischen Verbindungen vom Abwasser abtrennen. Der bedeutende Anteil an im Abwasser gelösten siliciumorganischen Verbindungen kann nicht auf diese Weise separiert werden.

US 6299780 B beschreibt ein Verfahren zur Trennung einer mit Tensiden stabilisierten Siliconöl-Abfall-Emulsion mit basischen Chemikalien zur Abtrennung der Siliconöle.

DE 19638123 A beschreibt ein Verfahren zur Aufarbeitung von Alkohol sowie Harz und Geltröpchen enthaltendem Abwasser, welches bei der Hydrolyse von Chlor- und Alkoxyresten enthaltenden Silanen anfällt, mit Lauge und anschließend mit Wasserdampf.

Gegenstand der Erfindung ist ein Verfahren zur Abtrennung von im Abwasser gelöstem Dimethylsilandiol aus Dimethylsilandiol enthaltendem Abwasser, das mindestens 1 Gew.-% HC1 enthält,
bei dem im ersten Schritt das Abwasser auf mindestens 30 °C erwärmt wird,
das Abwasser in einem zweiten Schritt bei mindestens 30 °C mindestens 30 Minuten aufbewahrt wird und
das Abwasser in einem dritten Schritt durch ein Phasentrenn-element geleitet wird, in welchem die im ersten und zweiten Schritt gebildeten Tröpfchen abgetrennt werden, die siliciumorganische Verbindungen enthalten.

Im ersten und zweiten Schritt werden aus im Abwasser gelösten siliciumorganischen Verbindungen Tröpfchen gebildet, die im dritten Schritt durch eine an sich bekannte Vorrichtung zur Abtrennung von Tröpfchen abgetrennt werden. Dadurch können auch im Abwasser gelöste siliciumorganische Verbindungen vom Abwasser separiert werden. Insbesondere reagieren kurzkettige siliciumorganische Verbindungen zu langkettigen organischen Siliziumverbindungen. Optisch erkennbar ist die chemische Reaktion durch Ausfällen siliciumorganischer Verbindungen aus der Lösung. Dies führt zu einer erhöhten Rückgewinnung von siliciumorganischen Verbindungen, die wieder verwertet werden können. Gleichzeitig wird im Abwasser der persistente CSB gesenkt.

Mit dem Verfahren kann man verschiedenartige Abwässer behandeln, welche siliciumorganische Verbindungen enthalten. Bei der Herstellung von Siloxanen durch Hydrolyse von Methylchlorsilanen mit Wasser fällt Abwasser an. Das bei der Hydrolyse z.B. gebildete Dimethylsilandiol ist wasserlöslich und verbleibt im Abwasser. Bei dieser Hydrolyse fällt auch Chlorwasserstoff an, der zur Herstellung von Methylchlorid aus Methanol wiederverwendet wird. Der Chlorwasserstoff enthält Methylchlorsilane und deren Hydrolyse - und Kondensationsprodukte. Diese siliciumorganischen Verbindungen gelangen auch in das bei der Herstellung von Methylchlorid entstehende Wasser. Beide Abwässer haben gemeinsam, dass sie gelöste Salzsäure enthalten.

Siliciumorganische Verbindungen im Abwasser sind beispielsweise Dimethylsilandiol, cyclische Polydimethylsiloxane aus 3 bis 8 Dimethylsiloxaneinheiten, lineare Polydimethylsiloxane und verzweigte Polysiloxane mit Hydroxyl-, Alkoxy- und Alkylresten.

Die Polydimethylsiloxane sind nahezu wasserunlöslich. Sie liegen als feinstverteilte Tropfen im Abwasser vor. Dimethylsilandiol ist gut wasserlöslich dessen Löslichkeit ist temperaturabhängig.

Als bevorzugte Messmethode für die Bestimmung siliciumorganischer Verbindungen im Abwasser dient die ¹H-NMR Bestimmung der Methylgruppe am Si, die Messwerte werden bevorzugt als CH₃-(Si) in mg/kg im Abwasser angegeben und dienen als Maß für den persistenten CSB.

Das gut wasserlösliche Dimethylsilandiol kondensiert in Anwesenheit von Salzsäure leicht zu cyclischen und linearen Polydimethylsiloxanen.

Vorzugsweise enthält das eingesetzte Abwasser mindestens 5 Gew.-% HC1 und vorzugsweise höchstens 25 Gew.-%, besonders bevorzugt höchstens 15 Gew.-% HC1. Vorzugsweise wird das Abwasser im ersten Schritt auf mindestens 40 °C erwärmt und vorzugsweise auf höchstens 90 °C, besonders bevorzugt höchstens 80 °C erwärmt.

Die Erwärmung geschieht vorzugsweise in einem Wärmetauscher.

Im zweiten Schritt wird das Abwasser vorzugsweise mindestens 1 h, besonders bevorzugt mindestens 2 h aufbewahrt. Vorzugsweise wird die Temperatur, die im ersten Schritt eingestellt worden ist, beibehalten.

Der zweite Schritt wird vorzugsweise in einem Behälter durchgeführt, beispielsweise in einem Vorlagebehälter oder Rührkessel. Vorzugsweise wird im zweiten Schritt das Abwasser bewegt, insbesondere gerührt.

Im dritten Schritt wird das Abwasser durch ein Phasentrennelement geleitet, wodurch die Trennung der feinen Tröpfchen schwer wasserunlöslicher siliciumorganischer Verbindungen vom Abwasser erfolgt. Geeignete Phasentrennelemente sind alle Tröpfchenabscheider zur Abtrennung von Tröpfchen aus Flüssigkeiten. Hier werden an sich bekannte Phasentrennelemente eingesetzt, die beispielsweise in DE 113478, DE 2436080, DE 2804968 beschrieben sind. Vorzugsweise werden Koaleszensabscheider eingesetzt.

Die sich gebildeten schwer wasserunlöslichen siliciumorganischen Verbindungen reichern sich beispielsweise als Leichtphase im Koaleszensabscheider an und können im oberen Teil des Koaleszensabscheiders von der wässrigen Phase (Abwasser) abgeschieden werden.

Das Phasentrennelement enthält vorzugsweise ein Faserbett. Im Phasentrennelement wird die Trenneffizienz primär durch die Dimensionierung, wie Länge und Stärke des Faserbetts, dessen Werkstoff, wie Glasfaser, PTFE, PVDF, sowie Volumenstrom und verweilzeit bestimmt. Nach Durchströmen des Abwassers durch das Phasentrennelement reichert sich die Phase der siliciumorganischen Verbindungen im oberen Bereich des Phasentrennelements an und wird abgetrennt.

Im Phasentrennelement wird vorzugsweise mit einem Differenzdruck von 0,05 bar, besonders bevorzugt mindestens 0,5 bar, inbesondere mindestens 0,1 bar und vorzugsweise höchstens 1,5 bar, besonders bevorzugt höchstens 1 bar gefahren.

Das nach dem dritten Schritt aus dem Phasentrennelement abgeführte Abwasser kann der Abwasserbehandlung zugeführt werden.

Da in den meisten Fällen die Abtrennung der siliciumorganischen Verbindungen nach Durchlaufen der drei Verfahrensschritte nicht vollständig ist, kann das nach dem dritten Schritt aus dem Phasentrennelement abgeführte Abwasser als Gesamtstrom oder als Teilstrom erneut im erfindungsgemässen Verfahren in den drei Schritten behandelt werden. Dabei kann auch der erste Schritt ausgelassen werden, wenn die Temperatur des Abwassers für den zweiten Schritt geeignet ist.

Vorzugsweise werden für die erneute Durchführung des erfindungsgemässen Verfahrens weitere Vorrichtungen, insbesondere ein weiterer Behälter und ein weiteres Phasentrennelement eingesetzt.

Das beschriebene Verfahren kann in seinen drei Verfahrensschritten solange wiederholt werden, bis keine Abtrennung von den siliciumorganischen Verbindungen mehr möglich ist.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1: nicht erfindungsgemäß

Ein Abwasser der Methylchloridanlage wurde auf 40 °C temperiert. Die Salzsäurekonzentration des Abwassers betrug 1,5 Gew.-%. Mit ¹H-NMR wurde der Gehalt an Methylgruppen an Siliciumatomen bestimmt. Das Abwasser enthielt 900 mg/kg CH₃-(Si). Zwischen zwei waagerecht angebrachten Glassäulen wurde Phasentrennmaterial FTC III 750-G-N der Firma Franken Filtertechnik KG P eingespannt. Die Filterfläche betrug 49 cm². 1 1/h vortemperiertes Abwasser konnte mit einer Membranpumpe kontinuierlich über das Filtermaterial dosiert werden,
Das Abwasser enthielt nach der Filtration 850 mg/kg CH₃-(Si).

### Beispiel 2: erfindungsgemäß:

Beispiel 1 wurde wiederholt, allerdings wurde das Abwasser vorher 4 Stunden bei 40 °C in einem Kolben gerührt. Optisch konnte eine Veränderung festgestellt werden. Das vorher optisch klare Abwasser trübte sich in Funktion der Zeit ein.

Das so eingetrübte Abwasser wurde im Anschluss wie in Beispiel 1 beschrieben filtriert.

Es konnte eine deutliche zweite organische Phase separiert werden.

Das Abwasser enthielt nach der Filtration 700 mg/kg CH₃-(Si).

### Beispiel 3: erfindungsgemäß:

Abwasser wurde mit verschiedenen Salzsäurekonzentrationen 30 Minuten, 60 Minuten, 120 Minuten und 180 Minuten bei 40 °C im Kolben gerührt und im Anschluss wie im Beispiel 1 beschrieben filtriert. Die Ergebnisse sind in der Tabelle aufgeführt:

| | Temperatur °C | Zeit min | HCl-Gehalt im Abwasser ma% | CH₃-(Si)-Gehalt im Abwasser mg/kg |
|---|---|---|---|---|
| Versuch 1 | 40 | 0 | 0,43 | 1085 |
| | 40 | 30 | 0,43 | 985 |
| | 40 | 60 | 0,43 | 961 |
| | 40 | 120 | 0,43 | 958 |
| | 40 | 180 | 0,43 | 920 |
| Versuch 2 | 40 | 0 | 5,5 | 1085 |
| | 40 | 30 | 5,5 | 930 |
| | 40 | 60 | 5,5 | 868 |
| | 40 | 120 | 5,5 | 868 |
| | 40 | 180 | 5,5 | 775 |
| Versuch 3 | 40 | 0 | 8,9 | 829 |
| | 40 | 30 | 8,9 | 682 |
| | 40 | 60 | 8,9 | 682 |
| | 40 | 120 | 8,9 | 651 |
| | 40 | 180 | 8,9 | 651 |
| Versuch 4 | 40 | 0 | 13 | 829 |
| | 40 | 30 | 13 | 527 |
| | 40 | 60 | 13 | 527 |
| | 40 | 120 | 13 | 496 |
| | 40 | 180 | 13 | 465 |

### Beispiel 4: erfindungsgemäß

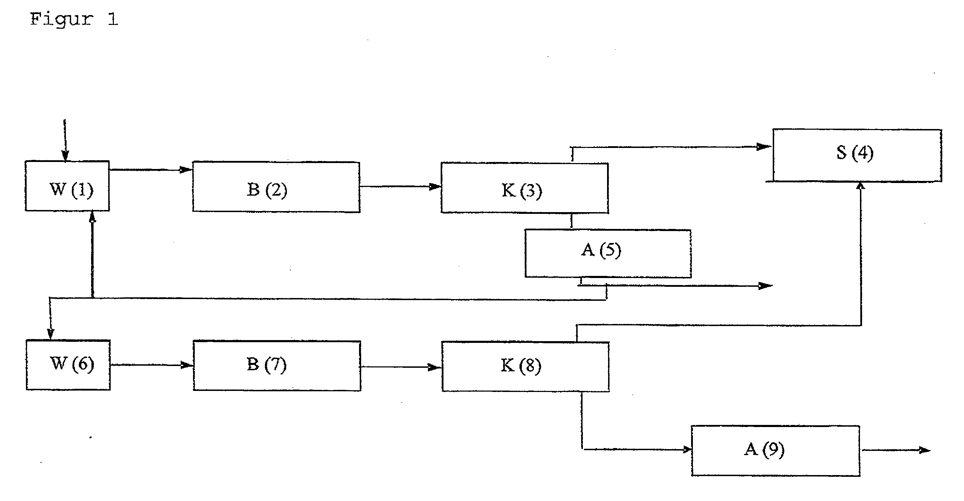

In einer Technikumsanlage gemäss Figur 1 wurde mit siliciumorganischen Verbindungen belastetes Abwasser wie folgt beschrieben behandelt:

In einem 1. Verfahrensschritt wurde das Abwasser mit einem Volumenstrom von 2500 - 7500 1/h über einen Wärmetauscher WT(1) geführt und auf 60 °C temperiert.

In einem 2. Verfahrensschritt gelangte das Abwasser in einen 70 m³ großen Behälter B(2). In diesem Behälter B(2) verblieb das Abwasser über einen zeitraum von 7 h. Innerhalb dieser *Zeitspanne fand die Reaktion von kurzkettigen zu langkettigen* siliciumorganischen Verbindungen statt. Optisch zu erkennen war die Reaktion durch Ausfällen siliciumorganischer Verbindungen aus der Lösung.

In einem 3. Verfahrensschritt wurde das sich im Behälter B(2) befindliche Abwasser mit einem Volumenstrom von ebenfalls 2500-7500 1 / h und einer Temperatur von 60°C in den nachfolgenden Koaleszer K(3) gefördert. Die physikalische Trennung erfolgte an den insgesamt vier eingebauten Phasentrennelementen FTC III 750-G-N-S der Franken Filtertechnik KG. Nach Durchströmen der Trennelemente reicherte sich die siliziumorganische Phase S(4) im oberen Bereich des Koaleszers K(3) an und wurde dem Produktionsprozess wieder zugeführt.

Ein Teil der anorganischen wässrigen Phase A(5), die ebenfalls weiterhin noch siliciumorganische Bestandteile enthielt, wurde über einen Wärmertauscher W(6) einem Behälter B(7) und anschließend einem Koaleszer K(8) (Glasapparatur) zugeführt. Der nicht über den zweiten Koaleszer K(8) geführte verbliebene Abwasserstrom A(9) wurde einer Abwasseraufbereitungsanlage zugeführt.

Alternativ kann der Teil der anorganischen wässrigen Phase A(5), in den Wärmertauscher W(1) zurückgeführt werden.

Ergebnis: In der beschriebenen Technikumsanlage wurden Abreicherungen bzw. Trennergebnisse von 1 bis 4 1/ h an siliciumorganischer Phase erreicht.

## Patentansprüche

1. Verfahren zur Abtrennung von im Abwasser gelöstem Dimethylsilandiol aus Dimethylsilandiol enthaltendem Abwasser, das mindestens 1 Gew.-% HC1 enthält,
bei dem im ersten Schritt das Abwasser auf mindestens 30 °C erwärmt wird,
das Abwasser in einem zweiten Schritt bei mindestens 30 °C mindestens 30 Minuten aufbewahrt wird und
das Abwasser in einem dritten Schritt durch ein Phasentrennelement geleitet wird, in welchem die im ersten und zweiten Schritt gebildeten Tröpfchen abgetrennt werden, die siliciumorganische Verbindungen enthalten.

2. Verfahren nach Anspruch 1, bei dem das Abwasser im zweiten Schritt bewegt wird.

3. Verfahren nach Anspruch 1 oder 2, bei dem das Phasentrennelement im dritten Schritt ein Koaleszensabscheider ist.

4. Verfahren nach Anspruch 1 bis 3, bei dem das Phasentrennelement mit einem Differenzdruck von 0,05 bar bis 1,5 bar gefahren wird.

5. Verfahren nach Anspruch 1 bis 4, bei dem nach dem dritten Schritt aus dem Phasentrennelement abgeführtes Abwasser als Gesamtstrom oder als Teilstrom erneut zur Behandlung in den ersten oder zweiten Schritt zurückgeführt wird.

## Claims

1. Method for separating off dimethylsilanediol dissolved in the wastewater from wastewater containing dimethylsilanediol and which contains at least 1% by weight of HCL, in which, in the first step, the wastewater is warmed to at least 30°C, the wastewater in a second step is kept at at least 30°C for at least 30 minutes and the wastewater, in a third step, is passed through a phase separation element in which the droplets that are formed in the first and second steps and which contain organosilicon compounds are separated off.

2. Method according to Claim 1, in which the wastewater is agitated in the second step.

3. Method according to Claim 1 or 2, in which the phase separation element in the third step is a coalescence separator.

4. Method according to Claims 1 to 3, in which the phase separation element is operated at a differential pressure of 0.05 bar to 1.5 bar.

5. Method according to Claims 1 to 4, in which, after the third step, wastewater removed from the phase separation element is recirculated as a total stream or as a substream for treatment again in the first or second step.

## Revendications

1. Procédé pour la séparation de diméthylsilanediol dissous dans de l'eau résiduaire à partir d'eau résiduaire contenant du diméthylsilanediol, qui contient au moins 1 % en poids de HC1,
dans lequel dans la première étape on chauffe l'eau résiduaire à au moins 30 °C,
dans une deuxième étape on maintient l'eau résiduaire à au moins 30 °C pendant au moins 30 minutes et
dans une troisième étape on fait passer l'eau résiduaire dans un élément séparateur de phases, dans lequel sont séparées des gouttelettes, formées dans la première étape et la deuxième, qui contiennent des composés organosiliciés.

2. Procédé selon la revendication 1, dans lequel l'eau résiduaire est mise en mouvement dans la deuxième étape.

3. Procédé selon la revendication 1 ou 2, dans lequel l'élément séparateur de phases dans la troisième étape est un séparateur à coalescence.

4. Procédé selon les revendications 1 à 3, dans lequel l'élément séparateur de phases est conduit avec une pression différentielle de 0,05 à 1,5 bar.

5. Procédé selon les revendications 1 à 4, dans lequel après la troisième étape de l'eau résiduaire évacuée de l'élément séparateur de phases est renvoyée, en tant que courant total ou en tant que courant partiel, de nouveau au traitement dans la première ou la deuxième étape.
